# EUROPÄISCHE PATENTSCHRIFT

(11) **EP 3 529 518 B1**
(45) Veröffentlichungstag und Bekanntmachung des Hinweises auf die Patenterteilung: **24.03.2021**
(21) Anmeldenummer: 17771339.3
(22) Anmeldetag: 19.09.2017
(51) Int. Cl.: F16H 57/029, F16J 15/54

(54) **GETRIEBE, AUFWEISEND EINE WELLE, EIN GEHÄUSETEIL UND EIN ADAPTERGEHÄUSE**
TRANSMISSION HAVING A SHAFT, A HOUSING PART AND AN ADAPTER HOUSING
TRANSMISSION COMPRENANT UN ARBRE, UNE PARTIE CARTER ET UN BOÎTIER D'ADAPTATEUR

(30) Priorität: 19.10.2016 DE 102016012501
(43) Veröffentlichungstag der Anmeldung: 28.08.2019
(73) Patentinhaber: SEW-EURODRIVE GmbH & Co. KG, 76646 Bruchsal (DE)
(72) Erfinder: SCHMIDT, Rolf, 76703 Kraichtal (DE); SIGMUND, Andreas, 76646 Bruchsal (DE)
(86) Internationale Anmeldenummer: PCT/EP2017/025259
(87) Internationale Veröffentlichungsnummer: WO 2018/072885

(56) Entgegenhaltungen:
- WO-A1-2010/009871
- DE-A1-102012 000 666
- DE-A1-102012 007 626

## Beschreibung

Die Erfindung betrifft ein Getriebe, aufweisend eine Welle, ein Gehäuseteil und ein Adaptergehäuse.

Es ist allgemein bekannt, dass ein Getriebe ein Gehäuseteil aufweist, in welchem eine Welle, wie Abtriebswelle, gelagert ist und welches zumindest teilweise mit Schmieröl befüllt ist.

**Aus der** DE 10 2012 007 626 A1 **ist ein Getriebe mit einer ersten Welle und einer zweiten Welle bekannt.**

**Aus der** DE 10 2012 007 626 A1 **ist als nächstliegender Stand der Technik ein Getriebe mit einer Zwischenwelle und einer abtreibenden Welle bekannt.**

**Aus der** DE 10 2012 000 666 A1 **ist ein Getriebe bekannt.**

**Aus der** WO 2010/ 009 871 A1 **ist ein Getriebe bekannt.**

Der Erfindung liegt daher die Aufgabe zugrunde, ein Getriebe weiterzubilden, wobei eine erhöhte Sicherheit für die Anlage erreichbar ist, in welcher das Getriebe verwendet wird.

Erfindungsgemäß wird die Aufgabe nach den in Anspruch 1 angegebenen Merkmalen gelöst.

Von Vorteil ist dabei, dass bei einer Montageausrichtung des Getriebes, bei welcher die axiale Richtung der Gravitationsrichtung entspricht, Schmieröl nicht aus dem Getriebe herausfließt, sondern bei Leckage des ersten Wellendichtrings das austretende Schmieröl in die ringförmige Vertiefung abgeleitet oder geschleudert wird. Somit ist das Schmieröl dann von einem Sensor detektierbar und eine entsprechende Warnung anzeigbar oder weitermeldbar. Wenn nämlich die Welle eine über einer Mindestdrehzahl liegenden Drehzahl aufweist, wird das Schmieröl von dem radial hervorstehenden Dichtring abgeschleudert in die Ausnehmung und vom Adaptergehäuse abgeleitet zur rinnenförmigen Vertiefung. Aber auch bei unter der Mindestdrehzahl liegenden Drehzahl, wie beispielsweise Stillstand der Welle, wird das Schmieröl vom Dichtring abgeleitet in die Vertiefung. Auch somit ist das durch die Leckage ausgetretene Schmieröl der Vertiefung zugeleitet und wird dann vom Sensor detektierbar.

Die Ringachse der ringförmigen Vertiefung, also einer Ringnut ähnlichen Vertiefung, ist vorzugsweise parallel zur axialen Richtung und somit auch Gravitationsrichtung ausgerichtet.

Bei einer vorteilhaften Ausgestaltung ist der Wandbereich radial zwischen Vertiefung und Welle angeordnet. Von Vorteil ist dabei, dass die Vertiefung einem Hinterschnitt entsprechend an der radialen Innenseite des Adaptergehäuses eingeformt ist. Durch den Wandbereich ist eine rinnenförmige Vertiefung, also eine einer Ringnut entsprechende Vertiefung, ausgeformt. Die Vertiefung erstreckt sich in axialer Richtung, ist rotationssymmetrisch ausgeformt und nach radial innen geöffnet, so dass das nach radial außen abgeschleuderte Schmieröl auffangbar und am Boden der Vertiefung sammelbar ist.

Bei einer vorteilhaften Ausgestaltung ist die Vertiefung ringförmig ausgeformt und ist vom Wandbereich und vom restlichen Adaptergehäuse begrenzt. Von Vorteil ist dabei, dass die Vertiefung in Umfangsrichtung um die Welle umlaufend gleichförmig ausgebildet ist und sich in axialer Richtung erstreckt, aber radial geöffnet ist zur Schmieröleinleitung.

Bei einer vorteilhaften Ausgestaltung überlappt der vom Dichtring überdeckte Radialabstandsbereich mit dem von dem Wandbereich überdeckten Radialabstandsbereich. Von Vorteil ist dabei, dass der Dichtring radial übersteht und somit bei Nichtdrehen der Welle ein Abtropfen oder zumindest Ableiten des Schmieröls zur Vertiefung hin erreichbar ist. Wichtig hierbei ist die Montagerichtung des Getriebes derart, dass die axiale Richtung in Gravitationsrichtung ausgerichtet ist.

Bei einer vorteilhaften Ausgestaltung ist der Dichtring in radialer Richtung mittels der Ausnehmung beabstandet vom Adaptergehäuse,
insbesondere wobei der Dichtring zum Wandbereich des Adaptergehäuses hin abdichtet. Von Vorteil ist dabei, dass der Dichtring radial hervorstehend ausbildbar ist und somit ein Abschleudern des Schmieröls zum Adaptergehäuse hin ausführbar ist. Somit ist zumindest bei genügend schnell drehender Welle ein Ableiten des Schmieröls weg von der Welle sicher erreichbar.

Bei einer vorteilhaften Ausgestaltung ist der erste Wellendichtring von einem ersten Ringteil aufgenommen, insbesondere an der Innenseite des Ringteils aufgenommen,
wobei das erste Ringteil im Gehäuseteil aufgenommen ist, insbesondere wobei das erste Ringteil mit dem Gehäuseteil dicht verbunden ist, insbesondere stoffschlüssig verbunden ist, insbesondere klebeverbunden ist,
insbesondere so, dass der erste Wellendichtring radial zwischen erstem Ringteil und Welle angeordnet ist. Von Vorteil ist dabei, dass der Wellendichtring auf einem kleinen Durchmesser montierbar ist.

Bei einer vorteilhaften Ausgestaltung dichtet ein zweiter Wellendichtring den vom Adaptergehäuse umgebenen Raumbereich zur Umgebung hin ab. Von Vorteil ist dabei, dass eine erhöhte Sicherheit erreichbar ist, so dass auch bei Leckage des ersten Wellendichtrings das Öl zumindest noch vom Dichtring abgeleitet wird und bei zusätzlichem Versagen dieses Dichtrings der zweite Wellendichtring eine zusätzliche Abdichtung bereitstellt.

Bei einer vorteilhaften Ausgestaltung ist der zweite Wellendichtring von einem zweiten Ringteil aufgenommen, insbesondere an der Innenseite des zweiten Ringteils aufgenommen,
wobei das zweite Ringteil im Gehäuseteil aufgenommen ist, insbesondere wobei das zweite Ringteil mit dem Gehäuseteil dicht verbunden ist, insbesondere stoffschlüssig verbunden ist, insbesondere klebeverbunden ist,
insbesondere so, dass der zweite Wellendichtring radial zwischen zweitem Ringteil und Welle angeordnet ist. Von Vorteil ist dabei, dass der Wellendichtring auf einem kleinen Durchmesser montierbar ist.

Bei einer vorteilhaften Ausgestaltung ist der Dichtring axial zwischen erstem und zweiten Ringteil angeordnet. Von Vorteil ist dabei, dass das durch Leckage am ersten Wellendichtring auftretende Schmieröl zumindest noch vom Dichtring am Austreten aus dem Getriebe gehindert wird und abgeleitet wird zur Vertiefung, in welcher eine Detektion mittels Sensor ermöglicht ist. Zusätzlich ist noch ein zweiter Wellendichtring als weitere Abdichtung wirksam, der vom zweiten Ringteil aufgenommen ist.

Bei einer vorteilhaften Ausgestaltung weist der Dichtring einen Schleuderkantenbereich und eine Dichtlippe auf,
insbesondere wobei zwischen dem Schleuderkantenbereich und der Dichtlippe eine radiale Verengung am Dichtring ausgebildet ist. Von Vorteil ist dabei, dass bei Nichtdrehen der Welle ein Abtropfen des Schmieröls von der Schleuderkante erreichbar ist. Somit ist ein schnelleres Ableiten in die Vertiefung ermöglicht.

Bei einer vorteilhaften Ausgestaltung nimmt der radiale Außendurchmesser des Dichtrings mit zunehmender Entfernung vom mit Schmieröl zumindest teilweise befüllten Raumbereich zur Bildung eines Schleuderkantenbereichs monoton zu, dann zur Bildung einer radialen Verengung ab und danach zur Bildung der Dichtlippe wieder zu. Von Vorteil ist dabei, dass ein radiales Wegleiten von der Welle sicher ausgeführt ist und somit ein Austreten in die Umgebung verhindert wird. Außerdem erhöht sich bei drehender Welle nach radial außen hin die Geschwindigkeit und somit die Zentrifugalkraft, so dass ein Abschleudern ausführbar ist.

Bei einer vorteilhaften Ausgestaltung ist der Dichtring als rotationssymmetrischer Körper ausgebildet. Von Vorteil ist dabei, dass eine einfache Herstellung ermöglicht ist.

Bei einer vorteilhaften Ausgestaltung weist die Dichtlippe des Dichtrings eine mit zunehmender Entfernung von dem Schleuderkantenbereich monoton abnehmende Wandstärke auf. Von Vorteil ist dabei, dass ein elastisches Andrücken an die am Wandberiech ausgebildete Berührfläche einfach ausführbar ist.

Bei einer vorteilhaften Ausgestaltung ist die Dichtlippe des Dichtrings elastisch gegen das Adaptergehäuse angepresst, insbesondere gegen eine am Adaptergehäuse ausgebildete Berührfläche angepresst ist, insbesondere wobei die Berührfläche eben ist und die Normalenrichtung der ebenen Berührfläche parallel zur axialen Richtung ausgerichtet ist. Von Vorteil ist dabei, dass eine verbesserte Dichtigkeit erreichbar ist.

Bei einer vorteilhaften Ausgestaltung ist das Adaptergehäuse aus härterem Material als das Gehäuseteil gefertigt,
insbesondere wobei das Adaptergehäuse aus GGG40 und das Gehäuseteil aus GG25 gefertigt ist. Von Vorteil ist dabei, dass höhere Querkräfte beim Getriebe vorsehbar sind.

Bei einer vorteilhaften Ausgestaltung ist das erste Lager axial zwischen dem Dichtring und dem zweiten Wellendichtring angeordnet ist. Von Vorteil ist dabei, dass eine große Entfernung zwischen dem ersten Wellendichtring und dem abtriebsseitigen Lager, also dem ersten Lager realisierbar ist. Somit sind hohe Querkräfte im Getriebe aufnehmbar.

Bei einer vorteilhaften Ausgestaltung ist das erste Lager als Schräglager realisiert. Von Vorteil ist dabei, dass hohe Querkräfte aufnehmbar sind.

Bei einer vorteilhaften Ausgestaltung ist der erste Wellendichtring durch zwei axial nebeneinander angeordnete, insbesondere einander berührend angeordnete, Wellendichtringe realisiert. Von Vorteil ist dabei, dass eine noch weiter verbesserte Abdichtung erreichbar ist. Denn falls einer der Wellendichtringe ausfällt, ist noch ein weiterer Wellendichtring vorhanden.

Bei einer vorteilhaften Ausgestaltung ist der zweite Wellendichtring durch zwei axial nebeneinander angeordnete, insbesondere einander berührend angeordnete, Wellendichtringe realisiert. Von Vorteil ist dabei, dass eine weiter verbesserte, also sicherere Abdichtung vorsehbar ist. Denn falls einer der Wellendichtringe ausfällt, ist noch ein weiterer Wellendichtring vorhanden.

Bei einer vorteilhaften Ausgestaltung ist auf der vom teilweise mit Schmieröl befüllten Raumbereich axial abgewandten Seite des zweiten Lagers ein Wellendichtring angeordnet, der das Gehäuseteil zur Welle hin abdichtet. Von Vorteil ist dabei, dass eine hohe Dichtigkeit hergestellt ist.

Bei einer vorteilhaften Ausgestaltung begrenzt ein Sicherungsblech den zweiten Wellendichtring axial, insbesondere wobei das Sicherungsblech mit dem ersten Ringteil schraubverbunden ist. Von Vorteil ist dabei, dass ein Ausstülpen eines Wellendichtrings zur Umgebung hin verhinderbar ist.

Bei einer vorteilhaften Ausgestaltung ist das erste Ringteil mit dem Adaptergehäuse stoffschlüssig verbunden, insbesondere klebeverbunden. Von Vorteil ist dabei, dass eine hohe Dichtigkeit erreichbar ist. Außerdem ist für das Ringteil eine genügend große Aufnahmeausnehmung in dem Gehäuseteil und auch im Adaptergehäuseteil vorsehbar, so dass das erste und/oder zweite Lager einführbar ist in seine Aufnahme. Durch die stoffschlüssige Verbindung ist eine hohe Dichtigkeit erreichbar.

Bei einer vorteilhaften Ausgestaltung ist das zweite Ringteil mit dem Gehäuseteil stoffschlüssig verbunden, insbesondere klebeverbunden. Von Vorteil ist dabei, dass ebenfalls eine hohe Dichtigkeit erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

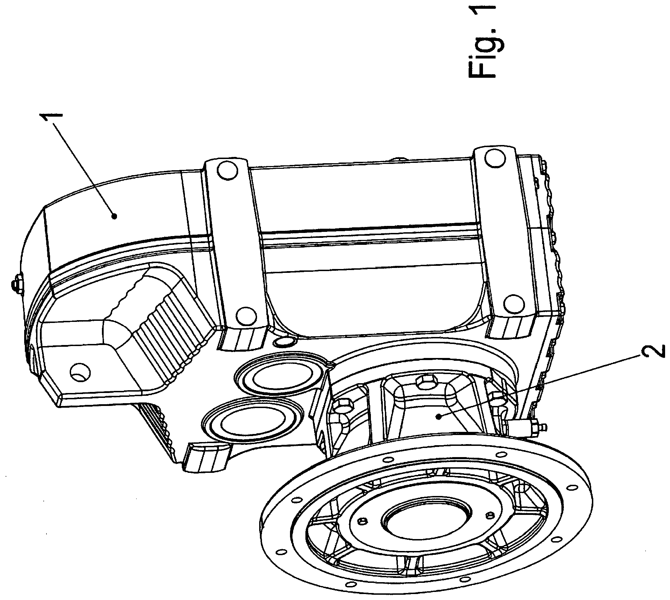

In der Figur 1 ist ein erfindungsgemäßes Getriebe in Schrägansicht gezeigt.

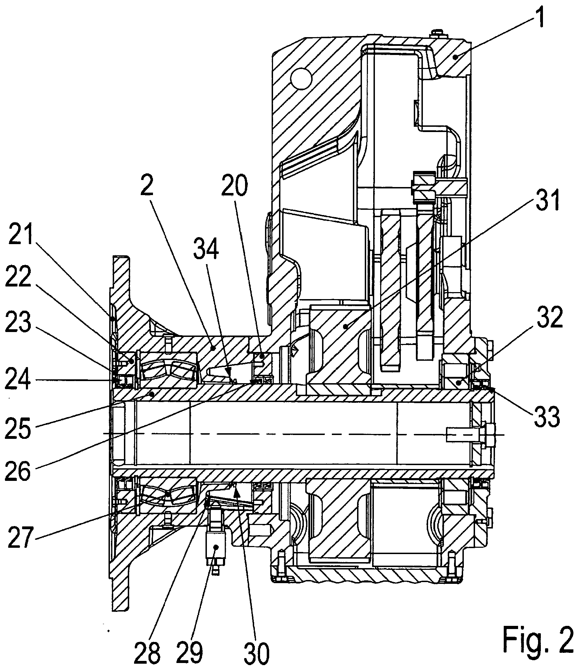

In der Figur 2 ist ein Querschnitt durch das Getriebe gezeigt.

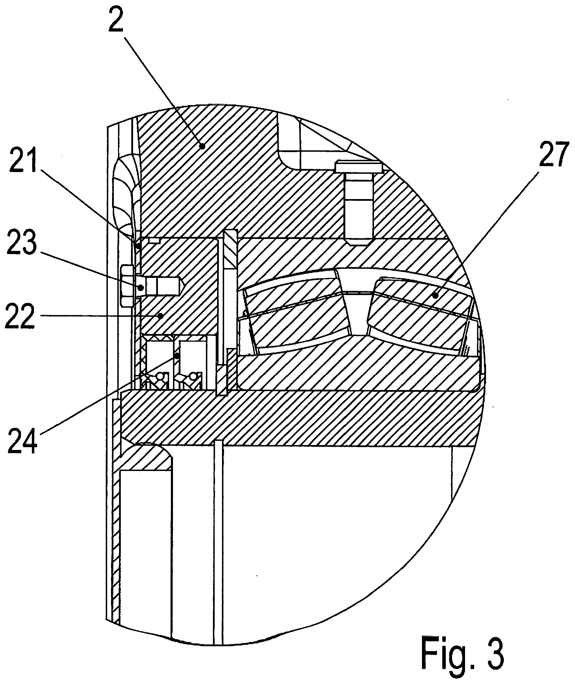

In der Figur 3 ist ein vergrößerter Ausschnitt der Figur 2 im Bereich der abtriebsseitigen Dichtstelle gezeigt.

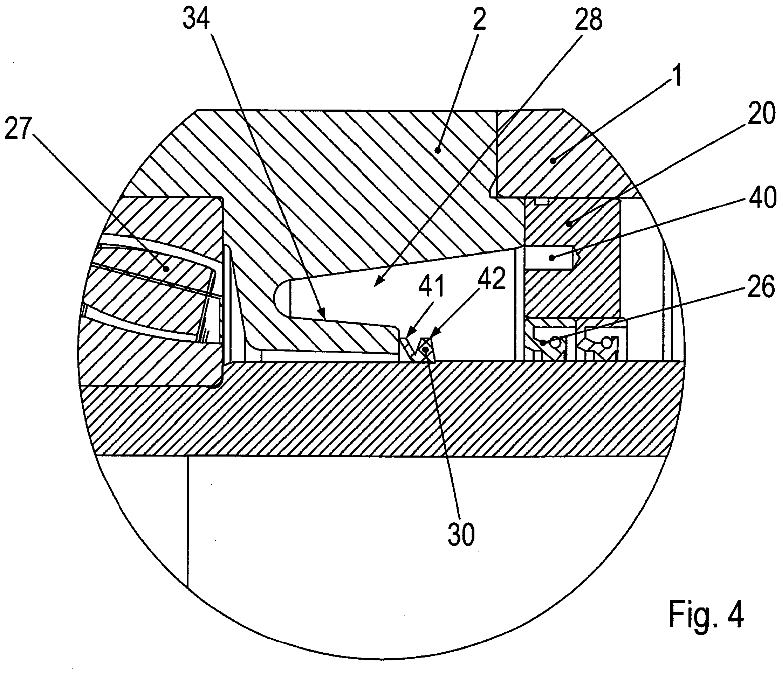

In der Figur 4 ist ein vergrößerter Ausschnitt der Figur 2 im Bereich einer innenseitigen weiteren Dichtung zur Erhöhung der Sicherheit gezeigt.

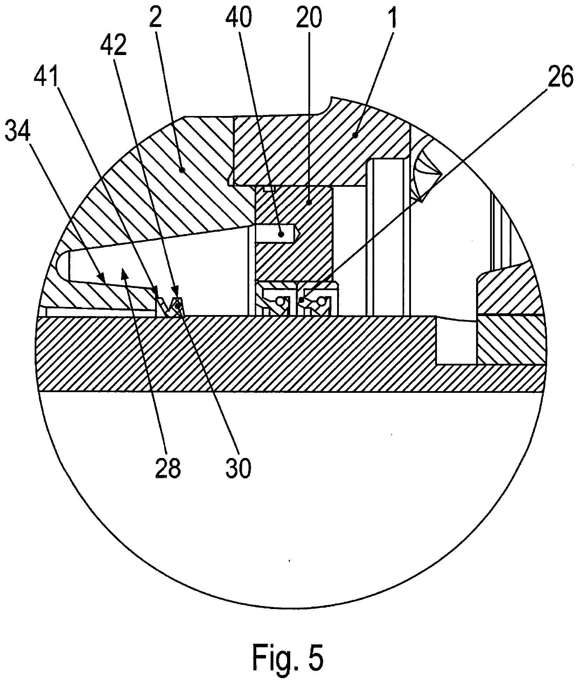

In der Figur 5 ist ein weiterer vergrößerter Ausschnitt der Figur 2 im Bereich einer innenseitigen weiteren Dichtung zur Erhöhung der Sicherheit gezeigt.

Wie in den Figuren gezeigt weist das Getriebegehäuse ein Gehäuseteil 1 und ein Adaptergehäuse 2 auf, die miteinander vorzugsweise schraubverbunden sind.

Die Abtriebswelle 25 des Getriebes ist mit einem ersten Lager 27 im Adaptergehäuse 2 gelagert und mit einem zweiten Lager 32 im Gehäuseteil 1. Mit der Abtriebswelle ist ein Verzahnungsteil, insbesondere Zahnrad 31, drehfest verbunden, dessen Verzahnung im Eingriff steht mit der Verzahnung eines weiteren Verzahnungsteils, das drehfest verbunden ist mit einer Zwischenwelle, die über Lager im Gehäuseteil 1 gelagert ist. Die eintreibende Welle des Getriebes ist ebenfalls im Gehäuseteil 1 gelagert und weist ein mit ihr drehfest verbundenes Verzahnungsteil auf, welches wiederum im Eingriff steht mit dem mit der Zwischenwelle drehfest verbundenem Verzahnungsteil oder bei höher stufiger Ausführung mit einem mit einer weiteren Zwischenwelle drehfest verbundenem Verzahnungsteil.

Zur Umgebung hin sind Wellendichtringe 33 axial neben dem zweiten Lager 32 der Welle 25 angeordnet. Vorzugsweise ist die Welle 25 vertikal orientiert, also die wellendichtringe 33 höher als das zweite Lager 32 angeordnet.

Abtriebsseitig, also bei der bevorzugten Verwendung nach unten gerichtet, ist die Welle 25 durch eine Ausnehmung des Adaptergehäuses 2 geführt, in welcher ein Ringteil 22 aufgenommen ist, welches Wellendichtringe 24 aufnimmt, deren Dichtlippe jeweils auf der Welle 25 laufen. Somit dichten die Wellendichtringe 24 die Welle 25 zum Ringteil 22 hin ab.

Das Ringteil 22 selbst hingegen ist zum Adaptergehäuse 2 hin dicht verbunden, insbesondere pressverbunden und/oder geklebt verbunden.

Das Ringteil 22 ist also zwischengeordnet zwischen Wellendichtring 24 und Adaptergehäuse 2.

Mittels einer Schraube 23 ist eine Sicherungsscheibe 21 schraubverbunden mit dem Ringteil 22. Hierzu weist das Ringteil 22 eine axial gerichtete Gewindebohrung auf, in welche die Schraube 23 eingeschraubt ist und somit mittels ihres Schraubenkopfes die Sicherungsscheibe 21 an das Ringteil 22 andrückt. Ein Ausstülpen der Wellendichtringe 24 zur Umgebung hin ist somit verhindert, da die Sicherungsscheibe 21 an zumindest dem axial weiter außen, also zur Umgebung hin unten sitzenden Wellendichtring anliegt. Die beiden Wellendichtringe 24 sind gleichartig aufgebaut und im selben Lagersitz aufgenommen, der am Ringteil 22 ausgebildet ist. Die Wellendichtringe 24 weisen jeweils zumindest eine Dichtlippe auf, die auf der Welle 25 läuft. Somit ist auch bei Versagen eines der Wellendichtringe 24 noch ein weitere Wellendichtring 24 in Funktion.

Der die Verzahnungsteile umfassende Innenraum des Getriebes ist mit Schmieröl gefüllt. Das Gehäuseteil 1 des Getriebes weist eine Ausnehmung auf, durch welche die Welle 25 zum Adaptergehäuse 1 hindurchgeführt ist. In der Ausnehmung ist ein Ringteil 20 aufgenommen, welches vorzugsweise baugleich zum obengenannten Ringteil 22 ist, also ebenfalls die axial gerichtete Gewindebohrung aufweist. Allerdings ist keine Schraube in die Gewindebohrung des Ringteils 20 eingeschraubt. Das Ringteil 22 ist mit dem Gehäuseteil 1 dicht verbunden, insbesondere pressverbunden und/oder geklebt verbunden.

Das Ringsteil 20 nimmt an seiner radialen Innenseite wiederum Wellendichtringe 26 auf, die das Ringteil 20 abdichten zur Welle 25 hin.

Das Ringteil 20 ist also zwischengeordnet zwischen Wellendichtring 26 und Gehäuseteil 1.

Somit ist der mit Schmieröl zumindest teilweise gefüllte Innenraum des Getriebes abgedichtet zum vom Adaptergehäuse 2 umfassten Innenraumbereich.

Im Falle des Versagens einer der Wellendichtringe 26 führt der zweite, im gleichen Lagersitz des Ringteils 20 aufgenommene Wellendichtring 26 die Dichtfunktion aus. Falls dieser zweite Wellendichtring 26 jedoch ebenfalls versagt ist erfindungsgemäß eine weitere Dichtung vorgesehen.

Diese weitere Dichtung ist als Dichtring 30 ausgeführt, der einen seinem dem Wellendichtring 26 zugewandten Ende einen radial hervorstehenden Schleuderkantenbereich 42 aufweist, der infolge seines radialen Hervorstehens vertikal an der Welle 25 abwärts fließendes Schmieröl radial ableitet und an dem Schleuderkantenbereich 42 abschleudert nach radial außen in eine im Adaptergehäuse 2 ausgeformte, ringförmige Vertiefung 28, insbesondere durch Hinterschnitt gebildete ringförmige Vertiefung 28.

Dabei ist die Vertiefung 28 bei Gussherstellung des Adaptergehäuses 2 formgebend hergestellt. An einer Umfangsstelle der Vertiefung 28 weist das Adaptergehäuse eine radial gerichtete Ausnehmung auf, in welcher ein Sensor 29 angeordnet ist zur Detektion von Schmieröl.

Wenn also vom Schleuderkantenbereich 42 abgeschleudertes Schmieröl sich sammelt in der Vertiefung 28, wird dieses detektiert vom Sensor 29und somit eine Warninformation aussendbar. Hierzu ist der Sensor 29 mittels Signalleitung mit einer übergeordneten elektronischen Steuerung verbunden, so dass das detektierte Schmieröl zu einer entsprechenden Information in der Steuerung führt, welche dann geeignete Maßnahmen, wie Abschalten des das Getriebe antreibenden Antriebs, Reduzieren der Drehzahl oder Stillsetzen des das Getriebe antreibenden Antriebs und/oder Anzeigen oder Weitermelden einer entsprechenden Warnung oder Defekt-Meldung.

Wie oben schon beschrieben, liegt der Dichtring 30 dicht an der Welle 25 an. Der obere Endbereich des Dichtrings 30 ragt als Schleuderkantenbereich 42 radial hervor, so dass nach unten abfließendes Schmieröl von der Welle 25 weg nach radial außen herausgeführt wird. Da hier eine hohe Drehgeschwindigkeit vorliegt, wird das Schmieröl nach Überschreiten einer Mindestdrehzahl radial weggeschleudert und von der Wandung der ringförmigen Vertiefung 28 aufgefangen. Das derart aufgefangene Schmieröl sammelt sich dann am Boden der Vertiefung 28 an und fließt in Umfangsrichtung bis zur radialen Ausnehmung, in welcher der Sensor 29 angeordnet ist.

Bei Nichtdrehen der Welle 25 tropft das Schmieröl von dem Schleuderkantenbereich 42 ab und somit direkt zum Boden der ringförmigen Vertiefung 28 hin oder auf eine radial hervorstehende Dichtlippe 41 des Dichtrings 30 und wird von dieser zur Wandung der ringförmigen Vertiefung 28 geleitet. Somit sammelt sich auch im Fall einer nichtdrehenden Welle oder einer mit einer die Mindestdrehzahl unterschreitenden Drehzahl drehenden Welle 25 das Schmieröl in der ringförmigen Vertiefung 28.

Axial zwischen Dichtlippe 41 und Schleuderkantenbereich 42 ist ein Einschnitt am Dichtring 30 ausgebildet.

Die Dichtlippe 41 berührt das Adaptergehäuse 2. Dabei ist die für die Dichtlippe 41 ausgebildete Berührfläche am Adaptergehäuse 2 fein bearbeitet und bildet einen im Wesentlichen ebenen Bereich, dessen Normalenrichtung im Wesentlichen parallel zur axialen Richtung ist.

Schmieröl, welches an der von der Welle 25 abgewandten Seite des Dichtrings 30 an der Dichtlippe 41 abfließt, fließt somit von der Berührfläche weg in die ringförmigen Vertiefung 28, insbesondere zum Bodenberiech dieser Vertiefung 28.

Zur Bildung der Dichtlippe 41 und des Schleuderkantenbereichs 42 weist der Dichtring 30 einen radialen Außendurchmesser auf der von seinem äußersten axialen Ende in axialer Richtung zunächst zunimmt zur Bildung des Schleuderkantenbereichs 42, dann abnimmt zur Bildung einer radialen Verengung zwischen Dichtlippe 41 und Schleuderkantenberiech 42 und dann wieder zunimmt zur Bildung der Dichtlippe 41.

Die Dichtlippe 41 selbst weist eine zum Adaptergehäuse 2 hin monoton abnehmende Wandstärke auf. Die Dichtlippe 41 ist elastisch angedrückt an die als Lauffläche fungierende Berührfläche. Somit ist mittels des Dichtrings 30 eine über die Wellendichtringe 26 hinausgehende Abdichtung erreicht. Diese durch den Dichtring 30 gebildete Abdichtung muss nur im Sicherheitsfall funktionieren bis der Sensor 29 das durch die Ölleckage ausgetretene Öl detektiert hat.

Die in Umfangsrichtung umlaufende Vertiefung ist durch einen Hinterschnitt im Adaptergehäuse 2 gebildet, der schon beim Gießen des Adaptergehäuses 2 gebildet wird und keiner Nachbearbeitung bedarf. Nur die als Lauffläche fungierende Berührfläche muss fein bearbeitet werden. Selbstverständlich muss auch die radial gerichtete Ausnehmung im Adaptergehäuse 2, welche den Sensor 29 aufnimmt, durch Bohren hergestellt werden.

Das Material des Adaptergehäuses 2 ist härter als das Material des Gehäuseteils 1. Beide (1, 2) sind aus Stahlguss, insbesondere Grauguss, gefertigt. Vorzugsweise ist als Material des Adaptergehäuses 2 GGG40 verwendet und als Material des Gehäuseteils 1 GGG25. Der Vorteil gegenüber Verwendung von gleich hartem Material für Adaptergehäuse 2 und Gehäuseteil 1 liegt darin, dass die Welle 25 axial länger ausgeführt werden kann und das Adaptergehäuse 2 die infolge der axial längeren Ausführung höheren Querkräfte aufnehmen kann.

Mittels der Ringteile 20 und 22 sind die Wellendichtringe 24 und 26 auf kleinerem Durchmesser angeordnet und somit kleineren Relativgeschwindigkeiten ausgesetzt. Dadurch ist eine höhere Standzeit erreichbar beziehungsweise die Sicherheit weiter erhöht.

Die baugleiche Ausführung der Ringteile 20 und 22 ermöglicht zudem eine geringere Teilezahl.

Die Vertiefung 28 ist im Adaptergehäuse 2 eingebracht, so dass sie von einem Wandbereich 34 zur Welle 25 hin und vom restlichen Adaptergehäuse 2 in den anderen Richtungen begrenzt ist. Der Wandbereich 34 ist also radial zwischen der Vertiefung 28 und der Welle 25 angeordnet. Die Lauffläche der Dichtlippe 41

**Der von den Wälzkörpern des Schräglagers, also des abtriebsseitigen Lagers, überdeckten Radialabstandsbereich umfasst auch den größten Radialabstandswert des** zweiten und/oder ersten **Wellendichtrings (24, 26). Somit sind also Wellendichtringe (24, 26) verwendbar, deren Außendurchmesser kleiner ist als der größte von den Wälzkörpern des Schräglagers eingenommene Durchmesserwert.**

Außerdem sind derartige Wellendichtringe (24, 26) verwendbar, deren Außendurchmesser größer ist als der kleinste von den Wälzkörpern des Schräglagers eingenommene Durchmesserwert.

**Die Welle 25 ist in dem von dem Wandbereich 34 und dem Dichtring 30 überdeckten axialen Bereich mit einem konstanten Durchmesser, also zylindrisch, ausgeführt.**

Bei einer anderen erfindungsgemäßen Ausführungsform ist der Dichtring 30 derart weit in die Ausnehmung des Adaptergehäuses 2 hervorragend ausgebildet, dass das von ihm von der Welle 25 abgeleitete Schmieröl bei Nichtdrehen der Welle 25 in die ringförmige Vertiefung 28 heruntertropft. Hierzu überragt der Dichtring 30 den Wandbereich 34 radial. Vorzugsweise ist am Dichtring 30 dann eine axial herunterragender Kragenbereich ausbildbar, welcher als Tropfkante wirkt. Bei Drehen der Welle 25 wird das Schmieröl wie auch bei dem zuvor beschriebenen Ausführungsbeispiel abgeschleudert ans Adaptergehäuse, also an den die Ausnehmung begrenzenden Oberflächenbereich des Adaptergehäuses 2.

### Bezugszeichenliste

1 Gehäuseteil
2 Adaptergehäuse
20 Ringteil, insbesondere umfassend axial gerichtete Gewindebohrung
21 Sicherungsscheibe
22 Ringteil, insbesondere umfassend axial gerichtete Gewindebohrung
23 Schraube
24 Wellendichtring
25 Welle, insbesondere Abtriebswelle
26 Wellendichtring
27 erstes Lager
28 ringförmige Vertiefung, insbesondere durch Hinterschnitt gebildete ringförmige Vertiefung
29 Sensor
30 Dichtring
31 Zahnrad
32 zweites Lager
33 Wellendichtring
34 Wandbereich des Adaptergehäuses 2
40 axial gerichtete Gewindebohrung für Schraube 23
41 Dichtlippe
42 Schleuderkantenbereich

## Patentansprüche

1. Getriebe, aufweisend eine Welle (25), ein Gehäuseteil (1) und ein Adaptergehäuse (2), wobei Gehäuseteil (1) und Adaptergehäuse (2) verbunden sind,
wobei im Adaptergehäuse (2) ein erstes Lager (27) zur Lagerung der Welle (25) aufgenommen ist,
wobei im Gehäuseteil (1) ein zweites Lager (32) zur Lagerung der Welle (25) aufgenommen ist, wobei im Gehäuseteil (1) ein mit Schmieröl zumindest teilweise befüllter Raumbereich angeordnet ist, welcher mittels zumindest eines ersten Wellendichtrings (26) zum Adaptergehäuse (2) hin begrenzt und/oder abgedichtet ist,
wobei der erste Wellendichtring (26) drehfest mit dem Gehäuseteil (1) verbunden ist und zur Welle (25) hin abdichtet, wobei der erste Wellendichtring (26) auf der Welle (25) läuft, wobei eine Dichtlippe des ersten Wellendichtrings (26) die Welle (25) berührt, **dadurch gekennzeichnet, dass**
auf der von dem Raumbereich axial abgewandten Seite des ersten Wellendichtrings (24) ein Dichtring (30) auf der Welle (25) angeordnet ist, welcher drehfest mit der Welle (25) verbunden ist, auf die Welle (25) aufgepresst und/oder aufgeschoben ist,
wobei der Dichtring (30) in eine Ausnehmung des Adaptergehäuses (2) zumindest teilweise hineinragt,
wobei die Ausnehmung eine umlaufende Vertiefung (28) umfasst, die zur Welle (25) hin von einem Wandbereich (34) des Adaptergehäuses (2) begrenzt ist,
wobei der Dichtring (30) den Wandbereich (34) berührt oder radial überragt, so dass an der Welle (25) axial herunterfließendes Schmieröl abgeleitet wird in die Ausnehmung oder Vertiefung (28),
wobei ein Sensor (29) zur Detektion von in die Vertiefung (28) abgeleitetem Schmieröl am Adaptergehäuse angeordnet ist in einer radial gerichteten, in die Vertiefung (28) mündenden Bohrung.

2. Getriebe nach Anspruch 1,
**dadurch gekennzeichnet, dass**
der Wandbereich (34) radial zwischen Vertiefung (28) und Welle (25) angeordnet ist, oder dass
die Vertiefung (28) ringförmig ausgeformt ist und vom Wandbereich (34) und vom restlichen Adaptergehäuse (2) begrenzt ist,
oder dass
der vom Dichtring (30) überdeckte Radialabstandsbereich überlappt mit dem von dem Wandbereich (34) überdeckten Radialabstandsbereich,
oder dass
der Dichtring (30) in radialer Richtung mittels der Ausnehmung beabstandet ist vom Adaptergehäuse (2),

3. Getriebe nach mindestens einem der vorangegangenen Ansprüche, **dadurch gekennzeichnet, dass**
der erste Wellendichtring (26) von einem ersten Ringteil (20) aufgenommen ist wobei das erste Ringteil (20) im Gehäuseteil (1) aufgenommen ist.

4. Getriebe nach mindestens einem der vorangegangenen Ansprüche, **dadurch gekennzeichnet, dass**
ein zweiter Wellendichtring (24) den vom Adaptergehäuse (2) umgebenen Raumbereich zur Umgebung hin abdichtet.

5. Getriebe nach mindestens einem der vorangegangenen Ansprüche, **dadurch gekennzeichnet, dass**
der zweite Wellendichtring (24) von einem zweiten Ringteil (22) aufgenommen ist, wobei das zweite Ringteil (22) im Gehäuseteil (1) aufgenommen ist.

6. Getriebe nach mindestens einem der vorangegangenen Ansprüche, **dadurch gekennzeichnet, dass**
der Dichtring (30) axial zwischen erstem und zweiten Ringteil (22) angeordnet ist.

7. Getriebe nach mindestens einem der vorangegangenen Ansprüche,
**dadurch gekennzeichnet, dass**
der Dichtring (30) einen Schleuderkantenbereich (42) und eine Dichtlippe (41) aufweist.

8. Getriebe nach mindestens einem der vorangegangenen Ansprüche,
**dadurch gekennzeichnet, dass**
der radiale Außendurchmesser des Dichtrings mit zunehmender Entfernung vom mit Schmieröl zumindest teilweise befüllten Raumbereich zur Bildung eines Schleuderkantenbereichs (42) monoton zunimmt, dann zur Bildung einer radialen Verengung abnimmt und danach zur Bildung der Dichtlippe (41) wieder zunimmt.

9. Getriebe nach mindestens einem der vorangegangenen Ansprüche,
**dadurch gekennzeichnet, dass**
der Dichtring (30) als rotationssymmetrischer Körper ausgebildet ist.

10. Getriebe nach mindestens einem der vorangegangenen Ansprüche,
**dadurch gekennzeichnet, dass**
die Dichtlippe (41) des Dichtrings eine mit zunehmender Entfernung von dem Schleuderkantenbereich (42) monoton abnehmende Wandstärke aufweist.

11. Getriebe nach mindestens einem der vorangegangenen Ansprüche,
**dadurch gekennzeichnet, dass**
die Dichtlippe (41) des Dichtrings elastisch gegen das Adaptergehäuse (2) angepresst ist.

12. Getriebe nach mindestens einem der vorangegangenen Ansprüche,
**dadurch gekennzeichnet, dass**
das Adaptergehäuse (2) aus härterem Material als das Gehäuseteil (1) gefertigt ist.

13. Getriebe nach mindestens einem der vorangegangenen Ansprüche,
**dadurch gekennzeichnet, dass**
das erste Lager (27) axial zwischen dem Dichtring (30) und dem zweiten Wellendichtring (24) angeordnet ist
und/oder dass das erste Lager als Schräglager realisiert ist.

14. Getriebe nach mindestens einem der vorangegangenen Ansprüche, **dadurch gekennzeichnet, dass**
der erste Wellendichtring (26) durch zwei axial nebeneinander angeordnete Wellendichtringe realisiert ist oder dass
der zweite Wellendichtring (24) durch zwei axial nebeneinander angeordnete, Wellendichtringe realisiert ist.

15. Getriebe nach mindestens einem der vorangegangenen Ansprüche,
**dadurch gekennzeichnet, dass** auf der vom teilweise mit Schmieröl befüllten Raumbereich axial abgewandten Seite des zweiten Lagers (32) ein Wellendichtring (26) angeordnet ist, der das Gehäuseteil (1) zur Welle (25) hin abdichtet,
und/oder dass
ein Sicherungsblech den zweiten Wellendichtring axial begrenzt,
oder dass
das erste Ringteil (20) mit dem Adaptergehäuse (2) stoffschlüssig verbunden ist
oder dass
das zweite Ringteil (22) mit dem Gehäuseteil (1) stoffschlüssig verbunden ist.

## Claims

1. A transmission, having a shaft (25), a housing part (1) and an adapter housing (2),
wherein the housing part (1) and adapter housing (2) are connected,
wherein a first bearing (27) for mounting the shaft (25) is received in the adapter housing (2),
wherein a second bearing (32) for mounting the shaft (25) is received in the housing part (1),
wherein a spatial region filled at least in part with lubricating oil is arranged in the housing part (1), which spatial region is limited and/or sealed off towards the adapter housing (2) by means of at least a first shaft sealing ring (26),
wherein the first shaft sealing ring (26) is connected non-rotatably to the housing part (1) and seals off towards the shaft (25), wherein the first shaft sealing ring (26) runs on the shaft (25), wherein
a sealing lip of the first shaft sealing ring (26) contacts the shaft (25),
**characterised in that**
on that side of the first shaft sealing ring (24) which is axially remote from the spatial region a sealing ring (30) is arranged on the shaft (25), which sealing ring is connected non-rotatably to the shaft (25), is pressed and/or pushed onto the shaft (25),
with the sealing ring (30) protruding at least in part into a cutout of the adapter housing (2),
with the cutout comprising a circumambient indentation (28) which is limited towards the shaft (25) by a wall region (34) of the adapter housing (2),
with the sealing ring (30) contacting or radially projecting over the wall region (34), so that lubricating oil axially flowing downwards on the shaft (25) is conducted away into the cutout or indentation (28),
with a sensor (29) for detecting lubricating oil conducted away into the indentation (28) on the adapter housing being arranged in a radially-directed bore which opens into the indentation (28).

2. A transmission according to Claim 1,
**characterised in that**
the wall region (34) is arranged radially between the indentation (28) and shaft (25), or **in that**
the indentation (28) is ring-shaped and is limited by the wall region (34) and by the rest of the adapter housing (2),
or **in that**
the radial distance region covered by the sealing ring (30) overlaps with the radial distance region covered by the wall region (34),
or **in that**
the sealing ring (30) in the radial direction is spaced apart from the adapter housing (2) by means of the cutout.

3. A transmission according to at least one of the preceding claims, **characterised in that**
the first shaft sealing ring (26) is accommodated by a first ring part (20),
with the first ring part (20) being accommodated in the housing part (1).

4. A transmission according to at least one of the preceding claims, **characterised in that**
a second shaft sealing ring (24) seals off that spatial region which is surrounded by the adapter housing (2) towards the surroundings.

5. A transmission according to at least one of the preceding claims, **characterised in that**
the second shaft sealing ring (24) is accommodated by a second ring part (22),
with the second ring part (22) being accommodated in the housing part (1).

6. A transmission according to at least one of the preceding claims, **characterised in that**
the sealing ring (30) is arranged axially between the first and second ring part (22).

7. A transmission according to at least one of the preceding claims, **characterised in that**
the sealing ring (30) has a spin-off edge region (42) and a sealing lip (41).

8. A transmission according to at least one of the preceding claims,
**characterised in that**
the radial external diameter of the sealing ring with increasing distance from the spatial region filled at least in part with lubricating oil increases monotonically to form a spin-off edge region (42), then decreases to form a radial constriction and thereafter increases again to form the sealing lip (41).

9. A transmission according to at least one of the preceding claims,
**characterised in that**
the sealing ring (30) is designed as a rotationally symmetrical body.

10. A transmission according to at least one of the preceding claims,
**characterised in that**
the sealing lip (41) of the sealing ring has a wall thickness which decreases monotonically with increasing distance from the spin-off edge region (42).

11. A transmission according to at least one of the preceding claims,
**characterised in that**
the sealing lip (41) of the sealing ring is pressed elastically against the adapter housing (2).

12. A transmission according to at least one of the preceding claims,
**characterised in that**
the adapter housing (2) is manufactured from harder material than the housing part (1).

13. A transmission according to at least one of the preceding claims,
**characterised in that**
the first bearing (27) is arranged axially between the sealing ring (30) and the second shaft sealing ring (24)
and/or **in that** the first bearing is realised as an angular contact bearing.

14. A transmission according to at least one of the preceding claims,
**characterised in that**
the first shaft sealing ring (26) is realised by two shaft sealing rings arranged axially next to each other
or **in that**
the second shaft sealing ring (24) is realised by two shaft sealing rings arranged axially next to each other.

15. A transmission according to at least one of the preceding claims,
**characterised in that**
on that side of the second bearing (32) which is axially remote from the spatial region filled in part with lubricating oil there is arranged a shaft sealing ring (26) which seals off the housing part (1) towards the shaft (25),
and/or **in that**
a securing plate axially limits the second shaft sealing ring,
or **in that**
the first ring part (20) is connected to the adapter housing (2) by a material-formed bond or **in that**
the second ring part (22) is connected to the housing part (1) by a material-formed bond.

## Revendications

1. Transmission comprenant un arbre (25), une partie carter (1) et un boîtier d'adaptateur (2), la partie carter (1) et le boîtier d'adaptateur (2) étant connectés,
un premier palier (27) pour le support de l'arbre (25) étant reçu dans le boîtier d'adaptateur (2), un deuxième palier (32) pour le support de l'arbre (25) étant reçu dans la partie carter (1),
une région de l'espace remplie au moins en partie d'huile de lubrification étant disposée dans la partie carter (1), laquelle est limitée et/ou étanchéifiée vers le boîtier d'adaptateur (2) au moyen d'au moins une première bague d'étanchéité d'arbre (26),
la première bague d'étanchéité d'arbre (26) étant connectée de manière solidaire en rotation à la partie carter (1) et étant étanchéifiée vers l'arbre (25), la première bague d'étanchéité d'arbre (26) tournant sur l'arbre (25),
une lèvre d'étanchéité de la première bague d'étanchéité d'arbre (26) venant en contact avec l'arbre (25),
**caractérisée en ce**
**qu'**une bague d'étanchéité (30) est disposée sur l'arbre (25), du côté de la première bague d'étanchéité d'arbre (24) axialement opposé à la région de l'espace, laquelle bague d'étanchéité est connectée de manière solidaire en rotation à l'arbre (25) et est pressée et/ou enfoncée sur l'arbre (25), la bague d'étanchéité (30) pénétrant au moins en partie dans un évidement du boîtier d'adaptateur (2),
l'évidement comprenant un renfoncement périphérique (28) qui est limité vers l'arbre (25) par une région de paroi (34) du boîtier d'adaptateur (2),
la bague d'étanchéité (30) venant en contact avec la région de paroi (34) ou dépassant radialement de celle-ci de telle sorte que de l'huile de lubrification s'écoulant axialement en dessous de l'arbre (25) soit détournée dans l'évidement ou le renfoncement (28),
un capteur (29) pour la détection d'huile de lubrification détournée dans le renfoncement (28) étant disposé au niveau du boîtier d'adaptateur dans un alésage orienté radialement débouchant dans le renfoncement (28).

2. Transmission selon la revendication 1, **caractérisée en ce que**
la région de paroi (34) est disposée radialement entre le renfoncement (28) et l'arbre (25), ou **en ce que**
le renfoncement (28) est réalisé sous forme annulaire et est limité par la région de paroi (34) et par le reste du boîtier d'adaptateur (2), ou **en ce que**
la région de distance radiale couverte par la bague d'étanchéité (30) chevauche la région de distance radiale couverte par la région de paroi (34), ou **en ce que**
la bague d'étanchéité (30) est espacée du boîtier d'adaptateur (2) dans la direction radiale au moyen de l'évidement.

3. Transmission selon au moins l'une quelconque des revendications précédentes,
**caractérisée en ce que**
la première bague d'étanchéité d'arbre (26) est reçue par une première partie annulaire (20),
la première partie annulaire (20) étant reçue dans la partie carter (1).

4. Transmission selon au moins l'une quelconque des revendications précédentes,
**caractérisée en ce**
**qu'**une deuxième bague d'étanchéité d'arbre (24) étanchéifie la région d'espace entourée par le boîtier d'adaptateur (2) vers l'environnement.

5. Transmission selon au moins l'une quelconque des revendications précédentes,
**caractérisée en ce que**
la deuxième bague d'étanchéité d'arbre (24) est reçue par une deuxième partie annulaire (22),
la deuxième partie annulaire (22) étant reçue dans la partie carter (1).

6. Transmission selon au moins l'une quelconque des revendications précédentes,
**caractérisée en ce que**
la bague d'étanchéité (30) est disposée axialement entre la première et la deuxième partie annulaire (22) .

7. Transmission selon au moins l'une quelconque des revendications précédentes,
**caractérisée en ce que**
la bague d'étanchéité (30) présente une région de bord de projection centrifuge (42) et une lèvre d'étanchéité (41).

8. Transmission selon au moins l'une quelconque des revendications précédentes,
**caractérisée en ce que**
le diamètre extérieur radial de la bague d'étanchéité augmente de manière monotone avec l'éloignement croissant de la région de l'espace remplie au moins en partie avec de l'huile de lubrification, pour former une région de bord de projection centrifuge (42), puis diminue pour former un rétrécissement radial et augmente ensuite à nouveau pour former la lèvre d'étanchéité (41).

9. Transmission selon au moins l'une quelconque des revendications précédentes,
**caractérisée en ce que**
la bague d'étanchéité (30) est réalisée sous forme de corps à symétrie de révolution.

10. Transmission selon au moins l'une quelconque des revendications précédentes,
**caractérisée en ce que**
la lèvre d'étanchéité (41) de la bague d'étanchéité présente une épaisseur de paroi diminuant de manière monotone avec l'éloignement croissant de la région de bord de projection centrifuge (42).

11. Transmission selon au moins l'une quelconque des revendications précédentes,
**caractérisée en ce que**
la lèvre d'étanchéité (41) de la bague d'étanchéité est pressée élastiquement contre le boîtier d'adaptateur (2).

12. Transmission selon au moins l'une quelconque des revendications précédentes,
**caractérisée en ce que**
le boîtier d'adaptateur (2) est fabriqué en un matériau plus dur que la partie carter (1).

13. Transmission selon au moins l'une quelconque des revendications précédentes,
**caractérisée en ce que**
le premier palier (27) est disposé axialement entre la bague d'étanchéité (30) et la deuxième bague d'étanchéité d'arbre (24)
et/ou **en ce que** le premier palier est réalisé sous forme de palier oblique.

14. Transmission selon au moins l'une quelconque des revendications précédentes,
**caractérisée en ce que**
la première bague d'étanchéité d'arbre (26) est réalisée par deux bagues d'étanchéité d'arbre disposées axialement l'une à côté de l'autre ou **en ce que**
la deuxième bague d'étanchéité d'arbre (24) est réalisée par deux bagues d'étanchéité d'arbre disposées axialement l'une à côté de l'autre.

15. Transmission selon au moins l'une quelconque des revendications précédentes,
**caractérisée en ce**
**qu'**une bague d'étanchéité d'arbre (26) est disposée sur le côté du deuxième palier (32) axialement opposé à la région d'espace remplie en partie avec de l'huile de lubrification, laquelle bague d'étanchéité d'arbre étanchéifie la partie carter (1) vers l'arbre (25),
et/ou en ce
**qu'**une tôle de fixation limite axialement la deuxième bague d'étanchéité d'arbre ou en ce que
la première partie annulaire (20) est connectée par liaison de matière au boîtier d'adaptateur (2) ou en ce que
la deuxième partie annulaire (22) est connectée par liaison de matière à la partie carter (1).
